# EUROPEAN PATENT APPLICATION

(11) **EP 1 580 468 A1**
(43) Date of publication of application: **28.09.2005**
(21) Application number: 04425200.5
(22) Date of filing: 22.03.2004
(51) Int. Cl.: F16K 31/05, F16K 11/044

(54) **Linearly driven valve**

(71) Applicant: Scanferla, Giorgio, 36061 Bassano del Grappa (VI) (IT)
(72) Inventor: Scanferla, Giorgio, 36061 Bassano del Grappa (VI) (IT)
(74) Representative: Bottero, Claudio

(57) **Abstract**

A linearly driven valve assembly (1) for heating and/or cooling systems and water-heating apparatuses comprises:
- a shutter (2) alternatively movable from a first to a second position at which the shutter (2) opens and, respectively, closes at least one valve seat (3a, 3b);
- a linear driving means (4) active on the shutter (2); and
- a first control means (5) active on the linear driving means (6);
which is characterized in that it further comprises a second control means (6) active on the first control means (5) to move the shutter (2) in a manual manner.

## Description

### Field of the invention

The present invention relates to a linearly driven valve assembly for heating and/or cooling systems and for water-heating apparatuses.

More in particular, the valve assembly of the invention may be preferably, but not exclusively, applied in heating and/or cooling systems and in water-heating apparatuses for domestic use, such as for example water boilers of the so-called combined type.

In the following description and in the subsequent claims, the expression "boiler of the combined type" is used to indicate a boiler adapted to generate hot water for space heating, or primary water, as well as hot water for sanitary use.

As is known, linearly driven valve assemblies primarily intended to the above-mentioned uses essentially comprise:
- a shutter alternatively movable from a first to a second position at which the shutter opens and, respectively, closes at least one valve seat;
- a linear driving means active on the shutter; and
- a control means active on said linear driving means to move the shutter in an automatic manner.

### Prior art

In water-heating systems and in heating and/or cooling systems in general, the need of using automatic valve assemblies capable of cutting off (two-way valves) or diverting (three-ways valves) the fluid circulating through the circuits provided therein is well known. Said valve assemblies generally comprise a shutter which, by opening or closing a respective receiving seat (two-way valves) or alternatively, by opening or closing opposite receiving seats (three-way valves), ensures the required service.

In the following description and in the subsequent claims, the term "fluid" is used to indicate any substance in liquid or gaseous form flowing through the valve assembly. Preferably but not exclusively, in the following reference will be made to water.

Moreover, even though in the following reference will be made mainly to three-way valves, it is understood that this will be given by way of illustrative but not limitative example, and that all aspects described will be analogously valid and immediately applicable also to two-way valves.

As is known, in valve assemblies employed in water-heating systems, there is the need, during the step of starting-up the system, that the shutter can be placed in a position such as to allow the water flow and the simultaneous air release, i.e. in an opening position in the case of two-way cut-off valves, and in an intermediate position in the case of three-way diverting valves, so as to allow the filling of the system.

An analogous need is felt in order to allow to empty the system in view of a more or less prolonged stop of the same.

For this purpose, the valve assemblies of this type are usually provided, in addition to the control means of automatic type comprising an electric motor, with further control means of manual type intended to move the shutter during the step of starting-up or during the step of preparing the stop of the heating system to fill or, respectively, empty the circuit, i.e. when the valve assembly is not yet, or no longer, electrically connected to the electricity supply. The control means of manual type is intended to self-disconnect as soon as the filling of the system and the connection of the system to the electrical supply are completed, so as to allow the automatic control of the valve assembly provided for the normal operation of the system.

In water-heating apparatuses, in which three-way diverting valves are mainly used, the filling of the apparatus is performed after the valve has been connected to the electricity supply. In view of this, the valve assemblies employed in water-heating apparatuses are not normally provided with a manual control means.

There are however examples of three-way valve assemblies for water-heating apparatuses comprising control means of manual type intended to place the shutter in a position intermediate to the above-mentioned first and second position, at which the at least one valve seat opens and, respectively, closes in order to handle possible electrical failures of the valve assembly.

In case of electrical failure, in fact, the positioning of the shutter at such intermediate position by means of the manual control means allows to ensure both the heating function and the function of delivering hot water for sanitary use, although not at the maximum values reachable by the apparatus in which the valve assembly is mounted.

Moreover, the control means of manual type is also useful for releasing the shutter whenever this is blocked in a valve seat after a long stop of the apparatus.

As is known, in fact, the valve assemblies are normally constituted by components made of metal materials, generally employed to form the valve body, the stem associated with the shutter, and the shaft intended to move the stem, as well as by components made of elastomeric materials, normally employed for the parts intended to perform a fluid-tight sealing action, such as for example seals and sealing elements in general. After a prolonged stop of the apparatus in which the valve assembly is mounted, the elastomeric parts maintained in contact with metal parts tend to adhere to the metal: this adhesion tends to increase the longer is the stop of the apparatus, and it may occur that, in order to separate the elastomeric parts from the metal parts, a very strong static friction is required, which is not always possible with control means of automatic type.

In order to overcome any problems of shutter blocking following a long stop, modem water-heating apparatuses supplied electrically may be provided with an electronic device intended to switch the valve at predetermined time ranges.

Although the aim is that of preventing an undesired shutter blocking, the provision of such electronic devices in water-heating apparatuses contributes to increase the overall cost of the apparatus and of the maintenance thereof and, above all, is not able to ensure the possibility of moving the shutter manually in case of failure of electrical supply or of a failure in any of the electrical components of the apparatus.

Among the various types of valve assemblies available on the market, valve assemblies for water-heating apparatuses comprising a gear motor which, by means of a lever or a cam, moves the shutter from the first to the second position described above, to open and, respectively, close the at least the valve seat are also known. The forward stroke of the shutter from the first to the second position is normally carried out by the gear motor, while the backward stroke of the shutter from the second to the first position is carried out by a contrast spring arranged for this purpose in an opposite position with respect to the gear motor.

In case the shutter is moved by a lever, the coupling between the shutter and the driving means is normally of reversible type, whereas, in case the shutter is moved by a cam, the coupling between the shutter and the driving means is normally of the irreversible type.

Such valve assemblies may be provided with a manual control means which is normally used in the steps in which the motor is not operated electrically, i.e. during the step of starting-up (filling) or during the step of putting the system in safety conditions in view of a long stop (emptying).

When the coupling is of the reversible type, the possible manual control means, if necessary, may also be used during the normal operation of the system to move the shutter manually, either by acting on the gear motor, generally by changing the rotation direction thereof, or by acting on the contrast spring.

However, in case the coupling is of the irreversible type, the manual control means can manually move the shutter only against the contrast spring, and cannot be used in case the gear motor is blocked with the contrast spring in a compressed state.

In other words, although the valve assemblies of this type with an irreversible coupling are substantially suitable for the purpose, they have a considerable disadvantage in that, in case the gear motor is blocked with the contrast spring in a compressed state, the shutter cannot be released either by means of a possible control means of manual type.

With reference to linearly driven valve assemblies, these are particularly suitable for heating and/or cooling systems and for water-heating apparatuses because they are structurally simple and they are adapted to be produced on a mass scale, which are therefore economically advantageous.

In particular, the linear driving means comprises a shaft provided with a threaded portion and the automatic control means comprises an electric motor associated with the linear driving means. The electric motor comprises a stator and an internally threaded rotor in threaded engagement with the shaft and housed in the stator.

The threading internally provided on the rotor and the threading externally provided on a shaft portion give rise to a coupling which is generally irreversible, i.e. having a reduced pitch, so as to ensure that the shutter exerts an adequate thrust action against the valve seat. The pitch may be slightly larger in order to ensure a reversible coupling, but only at high loads. This makes it very difficult to provide such type of linearly driven valve assemblies with manual control means which are able to satisfy the above-mentioned multiple needs. In other words, the coupling between the shaft and the rotor is irreversible or, at the most, reversible only above a very high load threshold and, in any case, the pitch of the threadings of the threaded portion of the shaft and of the rotor is so small that a possible manual control means adapted to move the shutter by means of an axial thrust on the shaft would cause an undesired damage to such threadings.

### Summary of the invention

In order to overcome the drawbacks of the prior art described above, the Applicant has perceived the need of providing a linearly driven valve assembly for heating and/or cooling systems and for water-heating apparatuses comprising linear driving means and automatic control means active on said linear driving means, which assembly is able both to fill or empty the system or apparatus in which the valve assembly is mounted, and to overcome a possible blocking of the shutter of the valve assembly during the normal operation of the system or of the apparatus in which the valve assembly is mounted.

In other words, the technical problem underlying the present invention is that of providing a linearly driven valve assembly which is able to displace the shutter to a desired position, both in order to start up or to put the system in safety conditions even when the control means of automatic type is not electrically connected, and in order to move the shutter during the operation of the system in case of failure of the automatic control means, or when this means is not able to release the shutter adhering to a valve seat, without either substantially modifying the valve assembly structure, or excessively increasing the production costs thereof.

In particular, the Applicant has found that it is possible to provide a linearly driven valve assembly with simple and economical manual control means which is able to move the shutter by directly acting on the automatic control means.

According to a first aspect of the invention, the above-mentioned problem is solved by a linearly driven valve assembly for heating and/or cooling systems and for water-heating apparatuses comprising:
- a shutter alternatively movable from a first to a second position at which it opens and, respectively, closes at least one valve seat;
- a linear driving means active on said shutter; and
- a first control means active on said linear driving means to move said shutter in an automatic manner;
which is characterized in that the valve assembly further comprises a second control means active on said first control means to move said shutter in a manual manner.

Thanks to these combination of features, the valve assembly of the invention enables to act directly on the first control means to move the shutter in a manual manner in case of programmed deactivation of the first control means (to allow to fill or empty the system) or in case of inefficient action of the first control means for accidental reasons (due to a failure of the first control means, or to inability thereof to move the shutter strongly adhering to a valve seat).

In other words, the valve assembly of the invention allows to move the shutter both during the steps of starting up and of programmed stop of the system, i.e. before the electrical connection or after the disconnection thereof, and in case of interruption of the electricity supply and in case of failure of the electrical components of the first control means of the valve assembly, as well as in case of blocking of the shutter due, for example, to the adhesion of the elastomeric parts of the shutter to a metallic seat of the valve assembly.

Preferably, the linear driving means comprises a shaft provided with a threaded portion.

According to a preferred embodiment of the valve assembly of the present invention, the first control means comprises an electric motor associated with said linear driving means, said electric motor comprising a stator and an internally threaded rotor in threaded engagement with said shaft and housed in said stator, said rotor including an end portion protruding from said stator.

The second control means preferably comprises;
- a means for transmitting motion integral with said end portion of the rotor; and
- a counter-means for transmitting motion intended to engage said means for transmitting motion, and to be driven manually in order to rotate said rotor of a predetermined number of revolutions.

Thanks to the fact that the second control means allows to perform a direct manual rotation of the rotor, the shutter can be advantageously moved in a manual manner even in case the coupling between the shaft and the rotor is irreversible. Furthermore, even in case the coupling between the shaft and the rotor is reversible, the action performed by the second control means is such as not to damage the threadings provided on the shaft and on the rotor.

The splitting of the control means in means and counter-means for transmitting motion also allows to position the counter-means for transmitting motion, which is intended to be operated by the user, in a position easily accessible by the user.

According to a preferred embodiment of the valve assembly of the invention, the counter-means for transmitting motion is intended to gear with the means for transmitting motion.

In this way, the valve assembly of the invention is provided with manual control means which is mechanically simple and economically advantageous, which advantageously contributes both to maintain the structure of the valve assembly simple, and to limit the overall cost of the same.

Preferably, the transmission means comprises a first gear integral with an end portion of the rotor, preferably with the above-mentioned end portion of the rotor protruding from the stator, more preferably in an opposite position with respect to the position of the shutter, and the transmission counter-means comprises a second gear rotatably mounted on a supporting element having a longitudinal axis substantially parallel to the rotation axis of the rotor.

In this manner, as will be described in more detail in the following, it is advantageously possible to place the second gear, i.e. the part intended to be operated directly by the user, in a position which is easily accessible by the user.

The first gear may for example be formed as a single piece with an end portion of the rotor protruding from the stator, preferably at the end portion more easily accessible when the rotor is mounted within the stator and coupled to the shaft.

According to an alternative embodiment, firstly a first gear may be positioned, and then this may be associated in a stable manner with an end portion of the rotor protruding from the stator.

According to a preferred embodiment of the valve assembly of the invention, this further comprises means for guiding the rotation of the rotor and means for locking the rotor on the guiding means.

In this case, the locking means, which is preferably mounted on an end portion of the rotor, can be advantageously exploited as a component of the valve assembly at which the transmission means may be formed as a single piece or to which the transmission means may be associated.

In particular, in this case, the transmission means may comprise a first gear formed on the locking means, such as for example a bush, a lock nut, or any other means suitable for locking the rotor on the guiding means.

Preferably, the guiding means comprises rolling bearings, such as for example ball bearings.

According to a particularly preferred embodiment of the valve assembly of the invention, this comprises a bush mounted on an end portion of the rotor protruding from the stator in order to lock the rotor on the guiding means, preferably in the form of ball bearings housed in a receiving seat, which is preferably formed in proximity of the end portion of the rotor opposite to the shutter.

According to this preferred embodiment, the transmission means may for example comprise a first gear formed as a single piece with the bush, and the transmission counter-means may comprise a second gear rotatably mounted on a supporting element substantially parallel to the rotation axis of the rotor.

In this manner, a double advantage is achieved, i.e. both the manufacturing of the second control means, of manual type, which is extremely simple from a constructive point of view - for which achievement it is sufficient to suitably shape the bush as a gear - and the positioning of such second control means in a zone of the valve assembly placed in an upper position with respect to the motor, i.e. in a position easily accessible by the user.

In the present description and in the following claims, the terms "upper" and "lower" (and similar terms such as "high" and "low") refer to the positions assumed by the components in a valve assembly assembled and mounted in a circuit.

Preferably, the first and second gear have the same diameter.

Advantageously, thanks to this geometrical feature, the manual positioning of the shutter in a predetermined position is simplified because such positioning is a function of the threading pitch formed on the threaded portion of the shaft. Each complete revolution of the second gear, in fact, causes the shutter to move for a distance equal to one pitch. Once the threading pitch formed on the threaded portion of the shaft is known, it is therefore possible to determine the distance covered by the shutter as a consequence of the rotation of the second gear.

According to a preferred embodiment of the valve assembly of the invention, the second gear is provided with a reference index intended to count the number of revolutions performed by the second gear.

In this manner, an advantage is achieved in that it is possible to visualize the number of revolutions performed by the second gear and, as a consequence, to determine the corresponding axial stroke effected by the shutter, once both the ratio between the diameters of the two gears and the threading pitch of the threaded portion of the shaft are known.

Preferably, the first and the second gear are provided with a plurality of teeth having a predetermined pressure angle, preferably comprised in the range 20°-45° and, more preferably, equal to about 30°.

Thanks to a configuration of the teeth of the first and of the second gear of such type, a radial thrust, away from the first gear, is advantageously exerted on the second gear. Such radial thrust may be advantageously exploited, as described in more detail in the following, to disconnect the second control means when this is no longer necessary to move the shutter, i.e. once the normal operating conditions of the apparatus in which the valve assembly is mounted are restored, i.e. when the shutter is moved by the linear driving means controlled by the first control means.

Preferably, the second gear is provided with a central pivot intended to be received in a corresponding hole formed in the above-mentioned supporting element.

Still more preferably, the pivot of the second gear is housed in a slot-shaped hole having a longitudinal axis substantially coinciding with the symmetrical axis common to the first and to the second gear.

In this manner, it is advantageously possible to limit the use of the manual control means exclusively to situations where this is strictly necessary. Once the normal operating conditions are restored, i.e. once the electric motor starts operating again or once the shutter has been released from the valve seat, thanks to said configuration of the hole of the supporting element in which the pivot of the second gear is housed, and thanks to the above-mentioned preferred configuration of the teeth of the first and of the second gear, the second control means is advantageously disconnected under the effect of the radial thrust of the first gear on the second gear, which causes the second gear to move away from the first gear to a position where the second control means is inactive.

According to an alternative embodiment of the valve assembly of the invention, instead of a central pivot, the second gear is provided with a pair of pins arranged on opposite sides with respect to the rotation axis of the second gear, such pins being intended to be received in a corresponding pair of holes formed in the above-mentioned supporting element.

As described in more detail in the following, this preferred embodiment is particularly suitable and advantageous in case the valve assembly further comprises an elastically deformable casing intended to house the linear driving means and the first and the second control means.

Preferably, the valve assembly of the invention further comprises a casing in which a seat for receiving the transmission counter-means is defined, which seat is shaped in such a manner that the transmission counter-means at least partially protrudes from the casing.

In this manner, both a protection of the moving parts and an easy access to the transmission counter-means by the user in order to operate the manual control means are advantageously attained.

Preferably, the casing comprises two separate, reciprocally associated shells, for example a lower shell associated with the valve body, in which lower shell the linear driving means and the first control means are preferably housed, and an upper shell associated with the lower shell in a manner conventional *per se*, in which upper shell the second control means is preferably housed. The upper shell is preferably provided with an upper seat to house a connector for connection to a means for supplying electricity, as well as with a lower seat to house the second control means.

Still more preferably, when the second control means comprises transmission means and counter-means as defined above, and the valve assembly comprises the above-mentioned guiding means and the above-mentioned locking means, the lower seat of the upper shell of the casing is shaped so as to house the transmission means, the guiding means, and the locking means, as well as the transmission counter-means. Preferably, the element for supporting the rotation of the transmission counter-means is formed in the upper shell, under the above-mentioned lower seat of the upper shell.

In the case of the above-mentioned preferred embodiment according to which the second gear of the transmission counter-means is provided with a pair of central pins arranged on both faces of the second gear, the respective elements for supporting the rotation of the transmission counter-means are preferably formed in the upper shell, under and, respectively, above the above-mentioned lower seat of the upper shell.

When the casing is made of an elastically deformable material, this, in addition to protect the moving parts of the valve assembly, also advantageously allows to snap-fit the second gear in said supporting element, by inserting the above-mentioned pivot or pins in the hole(s) of the supporting element, only after completion of the conventional assembling operations of the valve assembly.

In other words, in such a manner neither the nature nor the sequence of the traditional steps of assembling the valve assembly are altered, the transmission means being formed as a single piece with or associated with the rotor of the first control means and the transmission counter-means being mountable on the element supporting the same after completion of the usual assembling operations of the shutter, of the linear driving means and of the first control means.

### Brief description of the drawings

Further features and advantages of the present invention will become more readily apparent from the following detailed description of a preferred embodiment thereof, made hereafter, by way of illustrative but not limiting example, with reference to the attached drawings. In these drawings:
- figure 1 is a schematic view, in a partial longitudinal cross-section, of a preferred embodiment of a linearly driven valve assembly of the present invention, comprising first control means of automatic type and second control means of manual type;
- figure 2 is an enlarged schematic view, in longitudinal cross-section, of the second control means of manual type of the valve assembly of figure 1; and
- figure 3 is a cross-sectional view along line A-A of the control means of manual type of figure 2.

### Detailed description of preferred embodiments

In such figures, a linearly driven valve assembly according to the invention is generally indicated at 1. In particular, the valve assembly 1 is a three-way valve intended to be mounted in water-heating apparatuses for domestic use, such as for example gas-fired boilers of the combined type.
According to the invention, the valve assembly 1 is linearly driven and comprises:
- a shutter 2 alternatively movable from a first to a second position at which it opens and, respectively, closes at least one valve seat 3a, 3b;
- a linear driving means 4 active on the shutter 2; and
- a first control means 5 active on the linear driving means 4 to move shutter 2 in an automatic manner;
wherein the valve assembly 1 further comprises a second control means 6 active on the first control means 5 to move the shutter 2 in a manual manner.

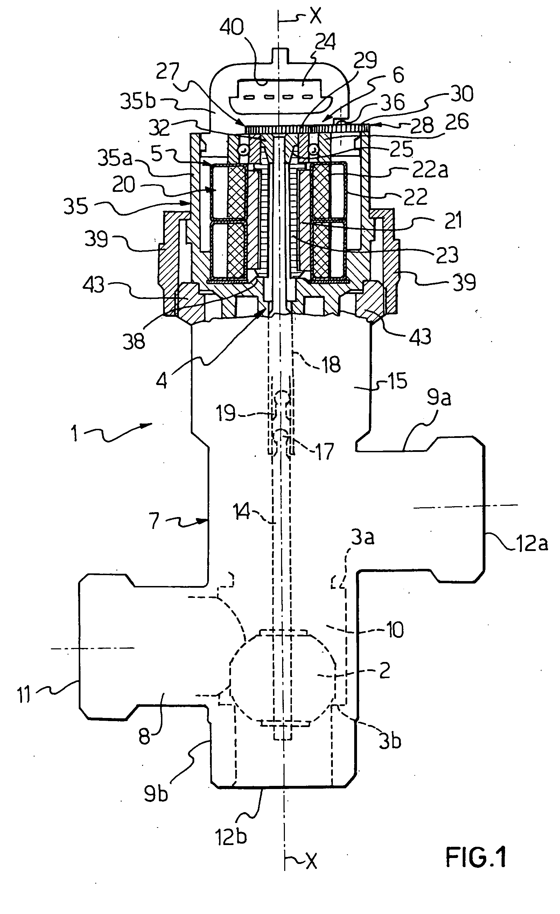

In the preferred embodiment shown in figure 1, the valve assembly 1 comprises a metal valve body 7 in which a fluid inlet conduit 8, a first fluid outlet conduit 9a and a second fluid outlet conduit 9b are defined, said conduits defining a first and, respectively, a second flow path.

Between the fluid inlet conduit 8 and the fluid outlet conduits 9a and 9b, a substantially cylindrical central chamber 10 is formed, in which the shutter 2 is slidably guided with mating engagement.

A fluid inlet opening 11 is formed at the entry of the fluid inlet conduit 8, while a first fluid outlet opening 12a and a second fluid outlet opening 12b are formed downstream of the fluid outlet conduits 9a and, respectively, 9b.

In proximity of the openings 11, 12a, and 12b, the fluid inlet and outlet conduits 8, 9a and 9b are threaded for threadably coupling to the ends of threaded fittings (not shown) of respective water circuits, also not shown.

The above-mentioned first and, respectively, second valve seats 3a and 3b, which are shaped in such a manner that the shutter 2 can be positioned on said seats in a fluid-tight manner, are defined internally to the first an the second flow path.

The shutter 2 is therefore slidable within the central chamber 10, according to a substantially rectilinear path, between the two valve seats 3a and 3b, at which it closes the first and, respectively, the second flow path in a fluid-tight manner.

The shutter 2 is fastened to the end of a stem 14 in a manner conventional *per se*, which stem is slidably guided in a corresponding hole axially formed in a plug, not shown, mounted in a fluid-tight manner in a tubular cylindrical portion 15 formed as a single piece with the valve body 7.

The free end of the stem 14 is shaped as a spherical tailpiece 17 on which, as will be better described in more detail in the following, the linear driving means 4 of the valve assembly 1 is active.

According to the preferred embodiment shown in figure 1, the linear driving means 4 comprises a shaft 18 provided with a threaded portion, conventional *per se* and not shown. Furthermore, according to the preferred embodiment illustrated in the above-mentioned figure, the threaded portion of the shaft 18 has a threading with irreversible pitch in threaded engagement with a corresponding threading formed on the first control means 5.

At the lower end thereof, the shaft 18 has a fork head 19 intended to receive the spherical tailpiece 17 of the stem 14 in a removable manner, in order to associate the stem 14 to the linear driving means 4.

Advantageously, the coupling between the stem 14 and the linear driving means 4 is of reversible type: in fact, for releasing the stem 14 from the fork head 19, it is sufficient to laterally pull the spherical tailpiece 31.

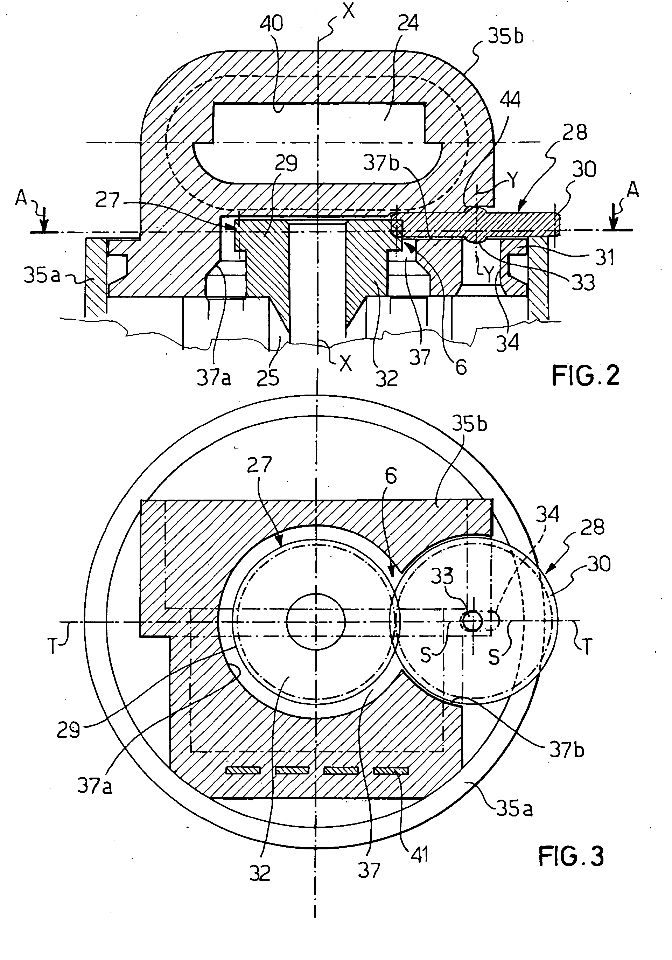

The above-mentioned first control means 5 comprises an electric motor 20 associated with the linear driving means 4. In particular, the electric motor 20 comprises a stator 22 and a rotor 23 internally threaded in threaded engagement with the above-mentioned threaded portion of the shaft 18. The motor 20 shown in figure 1 is also provided with a connector 24 for connection to electricity supply means. The connector 24 is electrically connected to the stator 22 through a plurality of conductors, all indicated by 41 in figure 3.

In a manner known *per se*, the rotor 23 includes permanent magnets 21 in the outermost radial portion thereof, and is housed within windings 22a of the stator 22, in order to be submitted to rotation, as will be better described in the following, around a rotation axis X-X, through excitation by a supply current circulating in the windings 22a.

In the preferred embodiment shown in figure 1, the rotor 23 includes an end portion 25 protruding from the stator 22, the end portion 25, in the illustrated example, being arranged opposite to the shutter 2.

In the embodiment shown in such a figure, the valve assembly 1 further comprises a means 26 for guiding the rotation of the rotor 23. For such a purpose, the end portion 25 of the rotor 23 lies on the guiding means 26, for example in the form of ball bearings mounted above the electric motor 20.

According to the preferred embodiment shown in figure 1, the second control means 6 of manual type of the shutter 2 comprises:
- means for transmitting motion 27 integral with the end portion 25 of the rotor 23 protruding from the stator 22; and
- counter-means for transmitting motion 28 intended to engage the means for transmitting motion 27, and to be driven manually in order to rotate the rotor 23 for a predetermined number of revolutions around the above-mentioned axis X-X.

According to the preferred embodiment shown in figure 1 and illustrated in greater detail in figures 2 and 3, the counter-means for transmitting motion 28 is geared with the means for transmitting motion 27. More particularly, the transmission means 27 comprises a first gear 29 integral with the end portion 25 of the rotor 23, and the transmission counter-means 28 comprises a second gear 30 rotatably mounted on a supporting element 31 having a longitudinal axis Y-Y substantially parallel to the rotation axis X-X of the rotor 23.

In particular, the second gear 30 is provided with a central pivot 33 intended to be received into a corresponding hole 34 formed in the supporting element 31 of the second gear 30.

As shown in figures 1 and 2, the hole 34 is preferably shaped as a slot having a longitudinal axis S-S substantially coinciding with the symmetrical axis T-T common to the first and to the second gear 29, 30.

The valve assembly 1 shown in figure 1 further comprises means 32 for locking the rotor 23 on the guiding means 26. In the preferred embodiment shown in such figure, the locking means 32 comprises in particular a bush mounted on the end portion of the rotor 23 and shaped in such a manner as to lock the rotor 23 on the ball bearings. As shown in figures 1 and 2, the first gear 29 is preferably formed as a single piece with said bush.

The first and the second gear 29, 30 have the same diameter in order to enable to determine the axial displacement of the shutter 2, once the pitch of the threading of the threaded portion of the shaft 18 is known, as a function of the number of revolutions performed by the second gear 30.

In order to further facilitate the determination of the axial displacement imparted to the shutter 2, the second gear 30 is also provided with a reference index, not shown, intended to count the number of revolutions performed by the second gear 30.

The first and the second gear 29, 30 are provided with a plurality of teeth, not shown, having a pressure angle comprised in the range 20°-45°, for example equal to about 30°.

According to the preferred embodiment shown in the above-mentioned figures, the valve assembly 1 further comprises an elastically deformable casing 35 intended to house the linear driving means 4 and the first and the second control means 5, 6. In the embodiment shown in these figures, the casing 35 is associated with the tubular cylindrical portion 15 of the valve body 7 by means of a threaded locking ring nut 39 in threaded engagement with a corresponding threading provided on a coupling flange 43 formed on the free end of the tubular cylindrical portion 15 of the valve body 7. The motor 20 is mounted on a supporting portion 38 of the casing 35, which is fastened, by the above-mentioned locking ring nut 39, to the coupling flange 43.

In the embodiment shown in figure 1, the casing 35 comprises in particular two shells, a lower shell 35a and an upper shell 35b, which are separate but associated to each other in a manner conventional *per se.* The above-mentioned supporting portion 38 of the casing 35 is provided on the lower shell 35a.

In the upper shell 35b, an upper seat 40 is formed to house the connector 24, and a lower seat 37 is formed to house the transmission means 27, the end portion 25 of the rotor 23, the guiding means 26, and at least one portion of the transmission counter-means 28, in particular the portion of the transmission counter-means 28 intended to engage the transmission means 27.

More in detail, in the illustrated embodiment, the lower seat 37 of the upper shell 35b comprises two portions, a first portion 37a to house the transmission means 27, the end portion 25 of the rotor 23, and the guiding means 26, and a second portion 37b to house the transmission counter-means 28, shaped in such a manner that the transmission counter-means 28 at least partially protrude from the casing 35 in order to be easily accessibly by a user.

In particular, the above-mentioned supporting element 31 is formed in the upper shell 35b of the casing 35, under the above-mentioned portion 37b of the lower seat 37 of the upper shell 35b.

In the preferred embodiment illustrated, the above-mentioned central pivot 33 protrudes from both faces of the second gear 30. The part of the central pivot 33 protruding from the upper face of the gear 30, i.e. from the face opposite to the supporting element 31, is received in a recess 44 defined in a portion of the upper shell 35b arranged above the second portion 37b of the lower seat 37 and shaped so as to avoid any interference between the part of the central pivot 33 protruding from the upper face of the gear 30 and the casing 35.

The operation of the valve assembly 1 described above permits to feed a fluid selectively to the hydraulic circuits associated with the first and the second flow path both in automatic and manual manner.

During the normal operation of the gas-fired boiler in which the valve assembly 1 is mounted, the linear driving means 4 of the shutter 2 is controlled by the first control means 5 of automatic type, in a manner known *per se* and briefly described in the following, thus either closing the first valve seat 3a, intercepting in this manner the first flow path, or closing the second valve seat 3b, intercepting in this manner the second flow path.

More in particular, the displacement of the shutter 2 from a first to a second working position at the first and, respectively, at the second valve seat 3a, 3b is performed by exciting the windings 22a of the stator 22 of the electric motor 20 by a supply current. Such excitation current produces a magnetic field such as to rotate the rotor 23 which, in turn, provokes a simultaneous translation of the shaft 18, whose threaded portion is in threaded engagement within the rotor 23. This causes a vertical translation of the stem 14 associated with the shutter 2.

By inverting the direction of the supply current in the windings 22a, and consequently the direction of the rotation of the rotor 23, it is possible to invert the direction of displacement of the shutter 2 in an extremely simple manner.

During the step of starting-up (filling) the boiler or in emergency conditions, for example if a power interruption of the electricity supply occurs due to the supplying means, or if a failure of the first control means 5 of automatic type occurs, the shutter 2 can nevertheless be advantageously moved thanks to the presence of the second control means of manual type.

For such a purpose, it is in fact sufficient to manually rotate the second gear 30 protruding from the casing 35. A rotation of the second gear 30 causes the rotation of the first gear 29 geared therewith. In turn, the rotation of the first gear 29 causes the rotation of the rotor 23 which causes, in a manner similar to that described above with reference to the operation of the first control means 5 of shutter 2, a simultaneous translation of the shaft 18 and a vertical translation of the stem 14 associated with the shutter 2.

By inverting the rotation direction of the second gear 30 and, consequently, the rotation direction of the rotor 23, it is possible to invert the direction of displacement of the shutter 2 in an extremely simple manner.

Once the normal operation conditions of the boiler in which the valve assembly 1 is mounted are restored, the first control means 5 start to rotate the rotor 23 again. Thanks to the configuration of the teeth of the first and of the second gear 29, 30, such rotation causes a radial thrust of the first gear 29 on the second gear 30. In turn, thanks to the presence of the slot-shaped hole 34, such radial thrust moves the second gear 30 away from the first gear 29, to a position of inactivity of the second control means 6.

The valve assembly 1 of the type described above can be manufactured according to the following steps of:
- providing the central chamber 10 of the shutter 2 upstream of the valve seat 3a, said chamber 10 having a width larger than the passage port of the valve seat 3a;
- inserting the shutter 2 in the chamber 10 by compressing the shutter 2 through the valve seat 3a;
- providing the linear driving means 4 and the first control means 5 of the shutter 2 downstream of the valve seat 3a; and
- providing the second control means 6 of the shutter 2 downstream of the first control means 5.

In particular, the first three of such steps are carried out in a completely conventional manner, as described in the following.

After having provided the central chamber 10 and inserted the shutter 2 in the chamber 10, the first control means 5 and the linear driving means 4 are assembled together in a manner known *per se,* to obtain a completely conventional motor assembly in which the locking means 32 of the rotor 23 (in the example illustrated in form of a bush) comprises the first gear 29 of the second control means 6. The motor assembly thus obtained is housed within the lower shell 35a of the casing 35. The lower shell 35a is associated with the valve body 7 by means of the locking ring nut 39, while the fork head 19 of the shaft 18 is hooked to the spherical tailpiece 17 of the stem 14, thus enabling the association of the stem 14 with the linear driving means 4.

At this point, the upper shell 35b is coupled to the lower shell 35a so as to house the bush (as well as the first gear 29 formed as a single piece with the bush) and the bearings forming the guiding means 26 in the portion 37a of the lower seat 37 of the upper shell 35b.

At the end of such steps, completely conventional *per se,* the second gear 30 of the second control means 6 is advantageously snap-fitted within the portion 37b of the lower seat 37 of the upper shell 35b by positioning the pivot 33 within the corresponding hole 34.

In other words, the second control means 6 is mounted at the end of the conventional assembling operations of the motor 20, whereby the assembly line of the valve assembly 1 of this invention is not substantially altered and can be advantageously made by providing a final assembly station, downstream of a traditional assembly line, intended to mount the second control means 6.

The numerous advantages afforded by the valve assembly of this invention can be readily appreciated in the light of the foregoing description.

A first important advantage is represented by the fact that it is always possible to move the shutter within the chamber formed within the valve body of the valve assembly, even when the first control means of automatic type is not electrically connected or is broken, or in any case is not able to displace the shutter, for example when the latter is blocked on a valve seat.

A second advantage is represented by the fact that the provision of the second control means of manual type in the valve assembly of the present invention does not involve any essential modification, to the valve assembly structure, nor does it influence the production costs of the same to a significant degree.

Naturally, the arrangement and the configuration of the components of the valve assembly described above, such as for example the valve body, the shutter, the fluid inlet and outlet conduits, are not critical in the context of the present invention, so that the man skilled in the art may choose alternative arrangements and configurations for such components which are suitable for satisfying specific applicative requirements.

## Claims

1. A linearly driven valve assembly (1) for heating and/or cooling systems and water-heating apparatuses comprising:
- a shutter (2) alternatively movable from a first to a second position at which the shutter (2) opens and, respectively, closes at least one valve seat (3a, 3b);
- a linear driving means (4) active on said shutter (2); and
- a first control means (5) active on said linear driving means (4) to move said shutter (2) in an automatic manner;
**characterized in that** said shutter (2) further comprises a second control means (6) active on said first control means (5) to move said shutter (2) in a manual manner.

2. The valve assembly (1) according to claim 1, wherein said linear driving means (4) comprises a shaft (18) provided with a threaded portion.

3. The valve assembly (1) according to claim 2, wherein said first control means (5) comprises an electric motor (20) associated with said linear driving means (4), said electric motor (20) comprising a stator (22) and an internally threaded rotor (23) in threaded engagement with said shaft (18) and housed in said stator (22), said rotor (23) including an end portion (25) protruding from said stator (22).

4. The valve assembly (1) according to claim 3, wherein said second control means (6) comprises:
- means for transmitting motion (27) integral with said end portion (25) of the rotor (23); and
- counter-means for transmitting motion (28) intended to engage said means for transmitting motion (27) and to be driven manually so as to rotate said rotor (23) of a predetermined number of revolutions.

5. The valve assembly (1) according to claim 4, wherein said counter-means for transmitting motion (28) is intended to gear with said means for transmitting motion (27).

6. The valve assembly (1) according to claim 5, wherein said transmission means (27) comprises a first gear (29) integral with said end portion (25) of the rotor (23) and said transmission counter-means (28) comprises a second gear (30) rotatably mounted on a supporting element (31) having a longitudinal axis (Y-Y) substantially parallel to the rotation axis (X-X) of the rotor (23).

7. The valve assembly (1) according to claim 5, further comprising means (26) for guiding the rotation of the rotor (23), and means (32) for locking said rotor (23) on said guiding means (26).

8. The valve assembly (1) according to claim 7, wherein said guiding means (26) comprises rolling bearings.

9. The valve assembly (1) according to claim 7, wherein said locking means (32) comprises a bush mounted on said end portion (25) of the rotor (23).

10. The valve assembly (1) according to claim 7, wherein said transmission means (27) comprises a first gear (29) formed as a single piece with said locking means (32) and said transmission counter-means (28) comprises a second gear (30) rotatably mounted on a supporting element (31) having a longitudinal axis (Y-Y) substantially parallel to the rotation axis (X-X) of the rotor (23).

11. The valve assembly (1) according to claim 6 or 10, wherein said first and second gear (29, 30) have the same diameter.

12. The valve assembly (1) according to claim 6 or 10, wherein said second gear (30) is provided with a reference index intended to count the number of revolutions performed by the second gear (30).

13. The valve assembly (1) according to claim 6 or 10, wherein said first and said second gear (29, 30) are provided with a plurality of teeth having a pressure angle comprised in the range 20°-45°.

14. The valve assembly (1) according to claim 6 or 10, wherein said second gear (30) is provided with a central pivot (33) intended to be received in a corresponding hole (34) formed in said supporting element (31).

15. The valve assembly (1) according to claim 14, wherein said hole (34) is shaped as a slot having a longitudinal axis (S-S) substantially coinciding with the symmetrical axis (T-T) common to the first and to the second gear (29, 30).

16. The valve assembly (1) according to claim 6 or 10, wherein said second gear (30) is provided with a pair of pins arranged on opposite sides with respect to the rotation axis of the second gear (30), said pins being intended to be received in a corresponding pair of holes of said supporting element (31).

17. The valve assembly (1) according to any one of the previous claims, further comprising a casing (35) made of an elastically deformable material, the casing (35) being intended to house said linear driving means (4) and said first and second control means (5,6).

18. The valve assembly (1) according to claim 17, wherein said casing (35) comprises two separate, reciprocally associated shells (35a, 35b).

19. The valve assembly (1) according to claim 17, wherein a seat (37b) is defined in said casing (35) to house the transmission counter-means (28), said seat (37b) being shaped in such a manner that said transmission counter-means (28) at least partially protrudes from said casing (35).
